# EUROPEAN PATENT SPECIFICATION

(11) **EP 0 624 121 B1**
(45) Date of publication and mention of the grant of the patent: **03.09.1997**
(21) Application number: 93914510.8
(22) Date of filing: 01.02.1993
(51) Int. Cl.: B29C 45/17

(54) **GAS-ASSISTED INJECTION MOULDING METHOD AND APPARATUS**
DURCH GAS UNTERSTüTZTES SPRITZGIESSVERFAHREN UND VORRICHTUNG
PROCEDE ET DISPOSITIF DE MOULAGE PAR INJECTION ASSISTE PAR GAZ

(30) Priority: 01.02.1992 GB 9202165; 13.07.1992 GB 9214788; 24.08.1992 GB 9217944
(43) Date of publication of application: 17.11.1994
(73) Proprietor: HAYWOOD HOLDINGS LIMITED, Cannock, Staffordshire WS11 3JU (GB)
(72) Inventor: PEARSON, Terence Colwyn, Nantwich, Cheshire CW5 5RL (GB)
(74) Representative: Downey, William Gerrard
(86) International application number: GB9300212
(87) International publication number: WO9314918

(56) References cited:
- WO-A-90/06220
- WO-A-93/01039
- GB-A- 2 139 549
- US-A- 4 164 523
- Patent Abstracts of Japan, vol.9, no.94 (M-374)(1817) 24 April 1985 & JP,A,59 220 338 (ICHIKO KOGYO) 11 December 1984
- Patent Abstracts of Japan, vol. 13, no.305 (M-849)(3653) 13 July 1989 & JP,A,01 095 007 (HONDA MOTOR) 13 April 1989

## Description

The invention relates to the injection moulding of thermoplastic and thermosetting materials.

The conventional well-known and widely practised process of injection moulding involves heating of thermoplastic materials in granular or powder form to a melt temperature at which they become molten, and are then injected into a mould cavity under comparatively high pressures of up to 1400kg/sq cm (20,000lb/sq inch) or more. The moulds normally consist of two halves which are mounted on moulding machine presses and as a result of the high internal pressures within the mould cavities, high locking forces are necessary to prevent the mould halves from opening. The forces required are directly proportional to the projected area of the moulding or mouldings within the mould and the pressure within the molten plastic.

High pressure is required in the first place to inject the comparatively viscous molten material into and then to fill the mould cavity or cavities. A secondary requirement is for the material to remain under pressure when cooling and being transformed from a molten into a solid state as the material is cooled by contact with the mould cavity surfaces which are at a lower temperature and below the melt temperature of the thermoplastic. As the material cools there is a natural volumetric shrinkage in the material and therefore it is necessary to force additional material into the mould cavity in order that the cavity shall continue to be completely filled with plastic, thereby creating a fully moulded part without sinkage marks on the mould surface when ejected from the mould.

During recent years there have been numerous attempts at developing versions of injection moulding which reduce the requirements for high pressures and improve the quality of the mouldings with the reduced tendency of the material to sink away from the mould cavity surfaces during cooling. These processes include a group known as "gas-assisted or gas injection moulding" in which fluids or gases are injected into the molten material flow either during the injection of the plastic into the mould or following initial filling of the mould cavity with molten plastic. In both cases the gas forms channels or hollow sections within the plastic. Thereby it is possible to create and transmit a pressure through the gas within the plastic material and for the gas to expand to compensate for shrinkage in the molten material. At the same time the plastic material continues to be forced against the mould cavity surfaces by the gas pressure, thereby attempting to make mouldings which are free of sink marks and to replicate the mould cavity surface. However there are restrictions and limitations in what can be achieved by the use of internal gas pressure processes as described below.

One group of processes within the gas-assisted group is referred to as a "structural foam". This encompasses methods of creating a cellular structure within the plastic material by the pre-mixing of a chemical blowing agent with the plastic before moulding. The blowing agent forms gases within the material at the plastic melt temperatures thereby creating a closed cellular structure within the plastic. An alternative method which has been practised involves the injection of gas into the plastic within the moulding machine cylinder and then thoroughly mixing with the plastic, also creating a closed cellular structure. A significant disadvantage of structural foam is the comparatively poor surface finish resulting from some of the gas rising to the material surfaces thereby creating swirl and gas marks on the surface. There have been various attempts including processes known as internal back pressure which have attempted to reduce the swirl effect by pre-pressurising sealed mould cavities before injecting the plastic and gas mixture. However all known structural foam processes have limitations in addition to defective surface finish.

There is another group of processes in which the gas is injected into the molten material at the moulding machine nozzle or within the flow as it flows through runners, sprues etc. into the mould cavities, and also by injecting the gas directly into the molten material within the mould cavities. In this group of processes continuous gas channels and hollow sections are formed with the objective of being able to transmit and control the gas pressure within the moulding from a gas source, and then at the end of the cooling cycle it is possible to exhaust the gas from the moulding thereby relieving the pressure before ejecting the moulding from the mould. In each case the gas is totally enclosed within the molten material and the path of entry, and is used as a means of exerting pressure within the moulding. These processes have limitations on their application by virtue of the moulding thickness and the impracticality of injecting gas within thin sections. It has also been found that it is virtually impossible to create surfaces on flat mouldings which do not bear evidence of ribs, bosses or webs on the opposite side and therefore do not fulfil the requirements of what are known as "class A finishes" by the automotive industries. Class A finishes require surfaces which have no visual optical changes in contour on the surface before or after paint finishing.

The group of processes referred to as gas-assisted or gas injection moulding as a result of these restrictions, are normally only applicable to moulding of thicker section in which internal cavities or continuous hollow channels can be formed. The hollow channels can be formed in thicker ribs but it has been found difficult to overcome visual evidence or sink marks opposite the ribs on flat surfaces, despite the presence of gas pressure within the ribs.

One known injection moulding apparatus and process in which an attempt has been made to overcome these problems is described in published international patent applications No. WO 90/062220. However, in the process as described in this application it is impossible to control the gas pressure and flow within the mould cavities without additional means of creating a consistent controllable gas pressure within the cavities. It is considered inevitable that this process will be ineffective because there will be gas leakage wherever there is metal-to-metal contact without a means of positive seal including, for example, at the shut-out surfaces between the two halves of the mould, between moving and fixed core inserts in the mould, and down ejector pin holes etc. In order to create and maintain a gas pressure it is considered necessary to use methods of sealing and/or to make modifications to the design of mouldings to prevent the leakage of gas from the mould cavity, thereby making it possible to create, maintain and control gas pressures within portions of the mould which are sealed surrounding gas inlet points.

According to one aspect of the present invention there is provided apparatus for injection moulding comprising first and second mould parts (1.1, 1.2) defining a mould cavity (1.19) means (1.17) for feeding synthetic plastics material to the mould cavity and means (1.20) for feeding gas under pressure to the mould cavity, characterised by means (2.11) for producing a seal associated with the means for feeding gas operative to restrict the flow of gas into the mould cavity beyond a certain point, said seal being formed by the fed synthetic plastics material being urged during moulding against the mould surface.

According to another aspect of the invention there is provided a method of injection moulding including the steps of feeding synthetic plastics material to the mould cavity defined by a mould, and feeding gas to the mould cavity under pressure characterised by confining the gas by a seal or seals to a specific area or areas in the mould cavity in order to assist the moulding process, said seal(s) being formed during moulding by the fed synthetic plastics material being urged against the mould surface.

In order that the invention may be more clearly understood, embodiments thereof will now be described, by way of example, with reference to the accompanying drawings, in which:-
Figure 1 is a diagrmmatic view in section of an injection moulding apparatus,
Figure 2 diagrammatically shows a modification of the apparatus of Figure 1,
Figure 3 is an expanded diagrammatic view of part of the apparatus of Figure 1,
Figure 4 is an expanded diagrammatic view of an alternative part to the part of the apparatus of Figure 3,
Figure 5a is a diagrammatic view in section of an alternative injection moulding apparatus,
Figure 5b is a diagrammatic plan of the apparatus of Figure 5a,
Figure 6a, 6b and 6c diagrammatically show progressive stages in a moulding operation,
Figure 6d is a plan view of Figure 6a,
Figure 7 is a diagrammatic view of a modification of the arrangement of Figure 6a,
Figure 8a is a diagrammatic partial plan view of a further embodiment of the invention,
Figure 8b is a section taken along the line A-A of Figure 8a,
Figure 8c is a section taken along the line B-B of Figure 8a, and
Figure 9a, 9b and 9c show progressive steps in a modified injection moulding process.

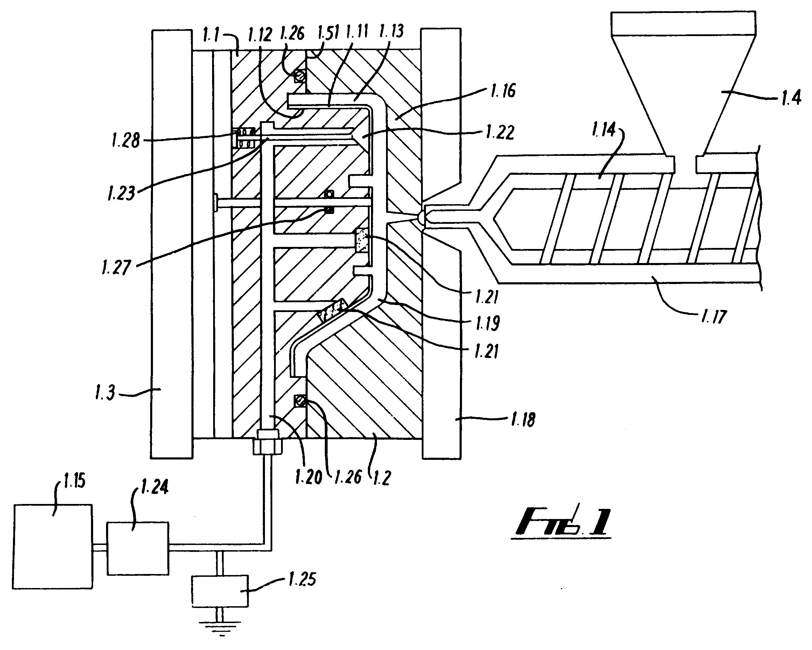

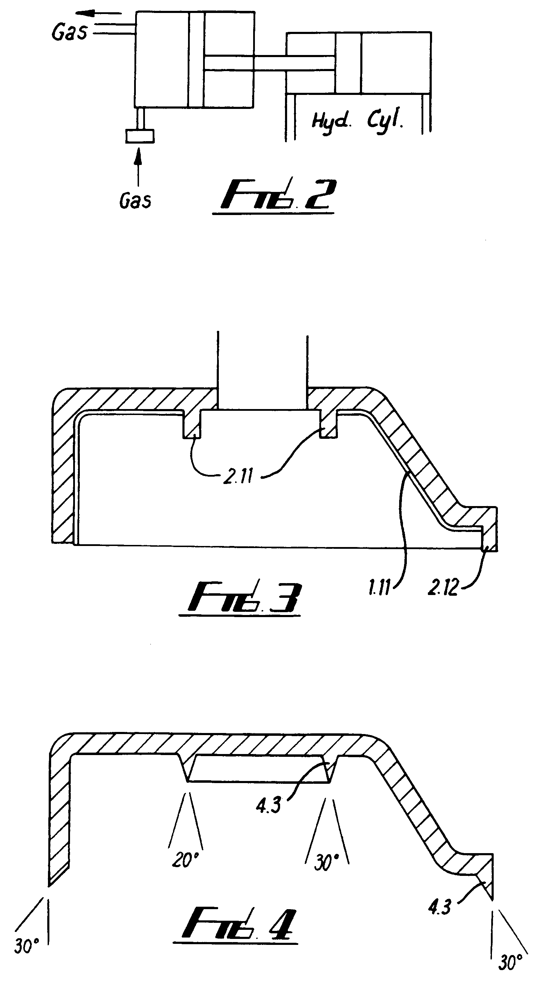

Referring to Figure 1, the injection moulding apparatus comprises a mould having two parts 1.1 and 1.2 on respective platens 1.3 and 1.18 and joined in operation along joint line 1.51. The mould parts define a mould cavity 1.19. Means 1.17 are provided for injecting plastics material 1.14 into the cavity 1.19. These means comprise an injection cylinder 1.17 fed with plastics material from a feed hopper 1.4. Seals 1.26 formed within the mould shut out surfaces are provided between the two mould parts. A gas supply and injection system is provided. This comprises a source of gas 1.15, gas pressure timer and regulator 1.24, gas relief valve 1.25 and gas delivery passage or duct 1.20. The gas delivery passage comprises a number of branches. Some of these lead to the mould cavity 1.19 via porous metal inserts 1.21 and one leads to the mould cavity 1.19 via a poppet valve 1.22. The valve comprises a mushroom shaped valve cone on a valve spindle 1.23 and is spring loaded by means of a spring 1.28. The geometry of the passage 1.20, the number of branches and the number of disposition of the inserts 1.21 and valve 1.22 may be varied as desired. The mould is provided with ejection pins 1.27. The means of supplying gas under pressure is provided with controls for pressure and timing of injection of the gas (preferably nitrogen) to the mould and then for varying the gas pressure within the cycle under control The supply of gas may be from a pressurised gas cylinder and pressure control valves, or a pressure pump, or a pneumatic piston and cylinder operated by a hydraulic cylinder (see Figure 2), or a combination of any of these means.

The above described apparatus operates as follows.

Molten plastic is injected from the mould machine heated cylinder injector 1.17 in the conventional manner to the mould cavity 1.19 in the mould mounted on the moulding machine press platens 1.3 and 1.18.

The mould cavity 1.19 is filled or nearly filled with molten plastic.

The gas is injected into the passages and channels 1.20 within one or both sides of the mould and injected into the mould cavity at the surface of the mould cavity 1.12 by the following possible alternative means after the molten plastic has flowed over the outlet port or ports 1.21 and 1.22.

### Either

a) Through porous metal inserts 1.21 fitted to the outlet ports of the gas passages.
   **OR**
b) Through poppet valves 1.22 which are located at the end of gas passages and operated by the following alternative means:-
   i) Gas pressure on the underside of a mushroom valve cone will open the valve 1.22, overcoming the resistance of a spring 1.28 and pressure exerted by the plastic on the face of the poppet valve.
      OR
   ii) By the use of pneumatic or hydraulic cylinders to independently control and operate the poppet valves 1.22.

A controlled amount of gas, or gas at a controlled variable pressure, is injected into the cavity to form a film(s) 1.11 or layer between the mould cavity surface 1.12 on one side of the mould and the adjacent skin of plastic material 1.13 which at the time of gas injection is substantially molten or semi-molten or flexible and the gas is prevented from leaking from the mould.

The gas pressure is then adjusted to what is referred to as "hold-on pressure" which continues to exert a pressure on one side of the plastic 1.13 to force the plastic against the opposite surface of the mould cavity 1.16. The pressure is then maintained and controlled whilst the plastic cools and solidifies, in order that the moulding surface shall replicate the surface of the mould 1.16.

After the plastic has solidified the pressure in the gas is reduced by exhausting through the path of entry of the gas 1.20 and a relief valve 1.25 and the mould is opened in order that the finished moulding can be ejected and removed.

Ejection of the moulded article may be assisted by retaining a reduced gas pressure within the mould cavity between the moulded article and the adjacent mould cavity surface from which the moulding is to be ejected.

Gas is not injected into the plastic material and does not penetrate the wall section as in other gas-assisted processes.

The gas is injected into the mould cavity through the inserts of porous metal 1.21 or through poppet valves 1.22 situated on the surface of the mould cavity or cavities. It is normal practice for gas to be injected within the female half of the mould prior to opening of the mould to release the moulding, and then following opening of the mould to inject gas through poppet valves or porous metal inserts to assist the ejection of the moulding from the male half of the mould.

It is also normal practice in the operation of poppet valves 1.22 to apply gas pressure to the underside of a mushroom-shaped valve head in order to open the poppet valve, thereby creating a gap for the gas to be injected into the mould cavity 1.19. Restriction to the opening of poppet valves in some cases is provided by springs 1.28 attached to the other end of the poppet valve spindle. An alternative means of operation of the poppet valve which is independent of the gas pressure, thereby enabling the gas pressure to be used solely for applying pressure to the plastic, is the use of pneumatic and hydraulic cylinders independently controlled to move the poppet valve spindle.

It is important to recognise that thermoplastic materials when cooling from a molten state at the melt temperature to ambient temperature when the plastic is in the solid state, have significant linear shrinkages of between 0.3% and as high as 2.5%. When these shrinkages occur in three directions the resulting volumetric shrinkage will be between 1% and 6%. It therefore becomes necessary in conventional injection moulding to compensate for this shrinkage so that the loss in volume of the plastic is replaced by the injection of additional plastic under high pressure as the plastic within the mould cools and shrinks. The resulting movement of the plastic within itself when this occurs is a contributory factor to creating moulded-in stress which can lead to distortion of mouldings after ejection from the mould.

If the volumetric shrinkage is compensated for locally by the injection and expansion of gas which is made possible by this invention, moulded-in stress is significantly reduced when movement within the plastic is minimal, with consequent reduced tendency for the moulding to distort after ejection from the mould.

Another result of the shrinkage in material is that the wall thickness of the material is reduced. For example, in a wall thickness of 2.5mm (0.1") with a high shrinkage material there can be a reduction 0.05mm (0.002"). The gap so created between the plastic wall section and the mould cavity can be sufficient for the creation of a space between the skin of the plastic and the mould cavity surface. The reduction in volume of the plastic to less than the volume of the mould cavity also relieves pressure within the plastic. It is therefore possible to inject a film of gas 1.11 after initial filling of the mould cavity 1.19, as a result of the linear shrinkage across the moulding wall section and as a result of the volumetric reduction in plastic material.

It is also well known that thicker sections such as pillars, bosses, ribs, webs and other protrusions will cause sink marks and visually apparent defects on the moulding surface opposite to the thicker section or protrusion, and in some high shrinkage materials the surface defects can be seen, even if the protrusion is less thick at the base than the channel wall section, which is the normal design criterion for injection moulded articles. Such defects on surfaces opposite to thicker sections and protrusions may be eliminated by applying pressure to the surface of the thicker section or protrusion, and the surrounding general wall section, forcing the opposite surface of the moulding against the mould cavity surface during the cooling process and whilst the material is solidifying, thereby reducing or eliminating the visual effect caused by the protrusion.

The above described apparatus and process enables the manufacture of mouldings with improved quality and with particular reference to:-
- improved surface finish of the side of the mould 1.16 opposite the gas film 1.11 without sink marks and more closely replicating the moulding cavity surface.
- reduced moulded-in stress as a result of less movement within the plastic during the cooling cycle, thereby reducing the tendency to warp and distort.
- continuing and more uniform pressurisation of the moulding or portions of the moulding remote from the material feed points during cooling of the plastic, and compensation for the volumetric shrinkage of the plastic as it cools by the localised expansion of gas and the displacement of the plastic material within its wall section.
- the increase of the scope of design of mouldings with the possibility of including additional features such as ribs, webs, pillars and variable wall section thickness without introducing detrimental effects including surface sink marks and other imperfections.
- Manufacturing cost of mouldings may also be reduced:-
   - by being able to apply pressure to the plastic where it is needed at localised areas of the moulding more easily.
   - by being able to apply the pressure locally and remote from the plastic feed point. As a result less overall pressure and reduced press locking forces are required with consequent savings in machine investment and power running costs.
   - as a result of not having to exert pressure through the plastic wall section over a comparatively long flow path whilst the plastic is still molten or semi-molten as a result of which the material thickness can be reduced with consequent savings in raw material costs.
   - by being able to reduce wall section thicknesses allowing moulding time cycles to be reduced.

The above described apparatus and process also enables a conventional thermoplastic injection moulding machine of the appropriate press and material injection capacity to be used.

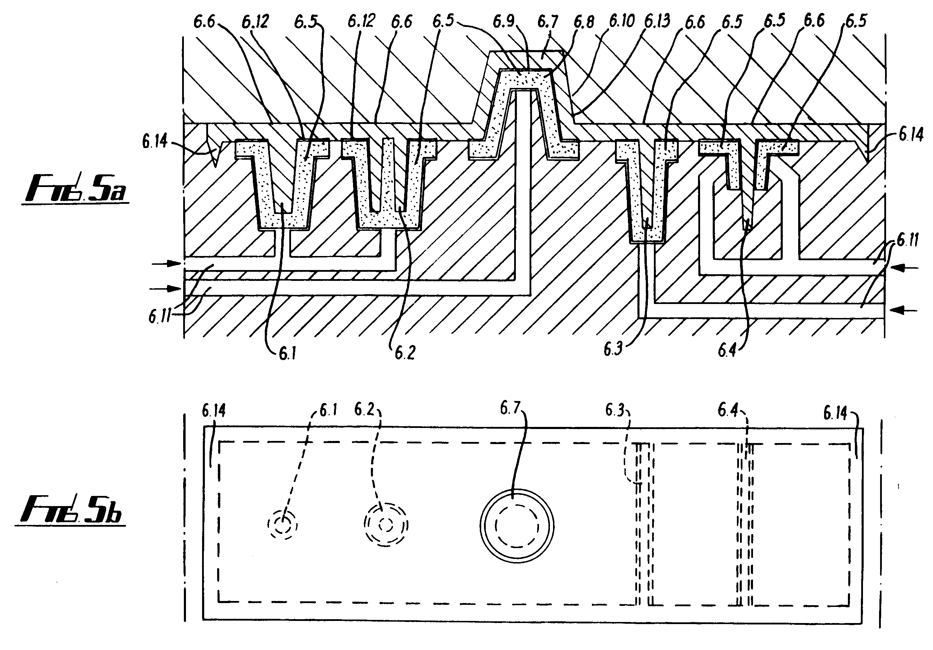

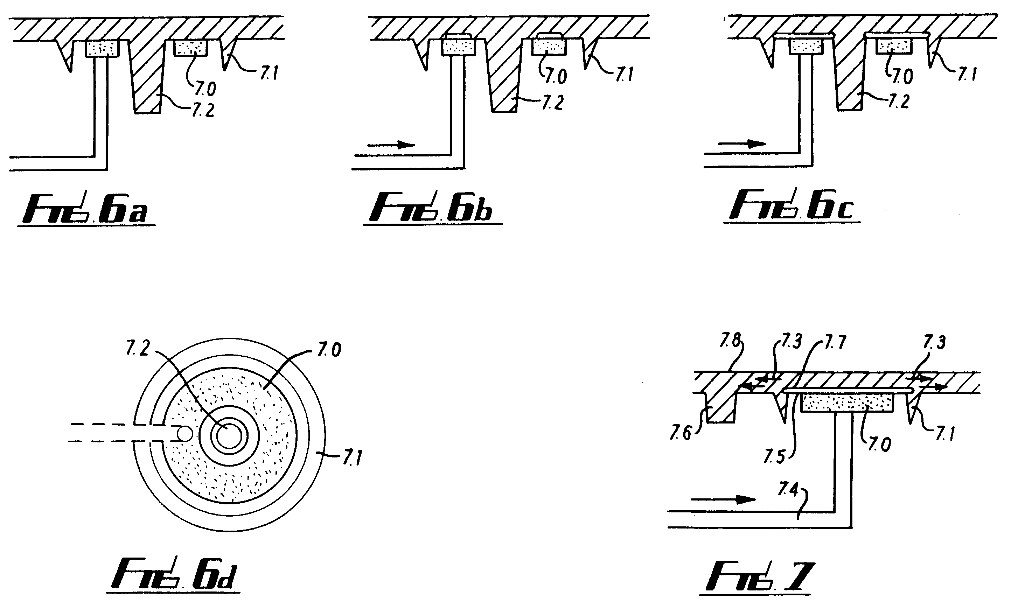

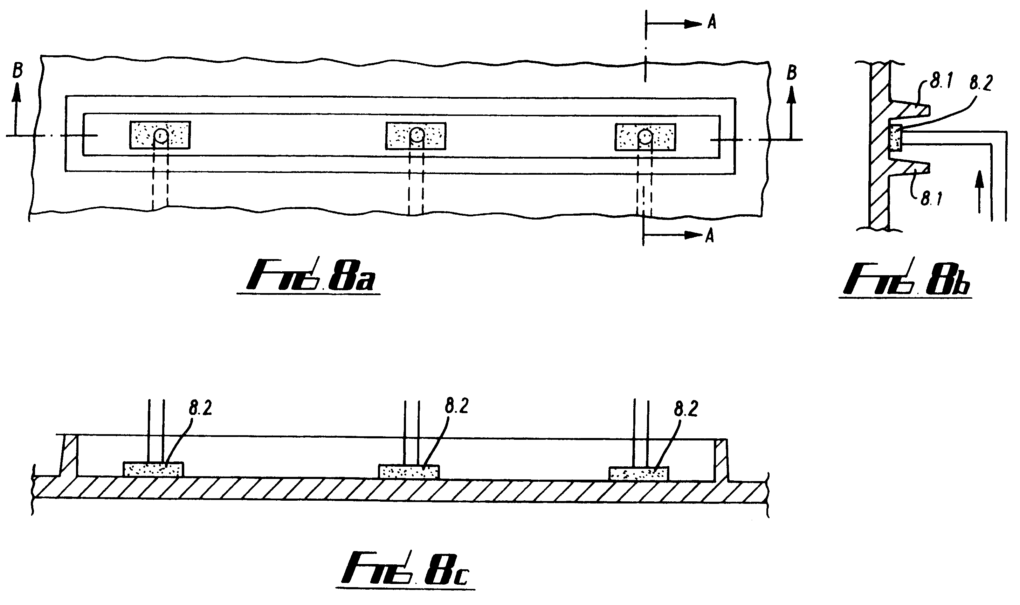

Referring to Figure 3, the moulded articles are designed to include continuous ribs, webs 2.11, flanges 2.12 and other means to create effective gas seals to prevent the leakage of gas film from the mould cavity or portions of the mould cavity into which the gas is injected, the gas urging the plastics against the mould surface to produce the seal. Referring to Figures 4 and 5, a preferred design of rib or flange may have a triangular cross-section with an apex angle of between 20° and 40° for example 30° as shown at 4.3.

The mould may be fitted with seals to prevent leakage of gas from the mould cavity at all points where leakage is possible and including the mould shut-out surfaces 1.26 fixed and sliding cores, and ejection pins 1.27.

In operation the porous metal inserts 1.21 or poppet valves 1.22 which allow the passages of gas to the mould cavity and the exhaust of the gas at the completion of the moulding cycle, prevent the ingress of plastic into the gas feeder channels or passages.

Referring to Figures 5a and 5b the porous metal inserts may be shaped and designed so that gas pressure may be applied on the whole or part of the surface of the protrusion from the mould surface, on such shapes as pillars 6.1, bosses 6.2, webs, ribs 6.3 and 6.4 and other shapes which stand proud of the general wall of the moulding, and which in conventional injection moulding tend to cause surface defects or sink marks on the opposite surface of the moulding 6.6. Porous metal inserts 6.5 may be cast or moulded or formed by machining to produce the desired feature. The insert may be finish machined by the well known spark erosion machining methods to retain the porosity of the insert surface. As previously described gas under pressure is fed through channels 6.11 within the mould to the porous metal inserts 6.5 and then through the inserts to form films or layers of gas 6.9 between the plastic and the mould cavity surface 6.12. Seals as previously described are shown at 6.14.

It is also possible, to pressurise localised features of the moulding which stand proud of the surface of the body of the moulding 6.7 and which are formed on the inside by male cores 6.8 which can be partly or wholly made of porous metal (Figure 5) through which gas can be injected to form a film or layer 6.9 around the core and surrounding portion of the mould, thereby pressurising the plastic from the inside of the protruding feature in order that the outer surface 6.10 of the protrusion may more perfectly replicate the mould cavity surface 6.13.

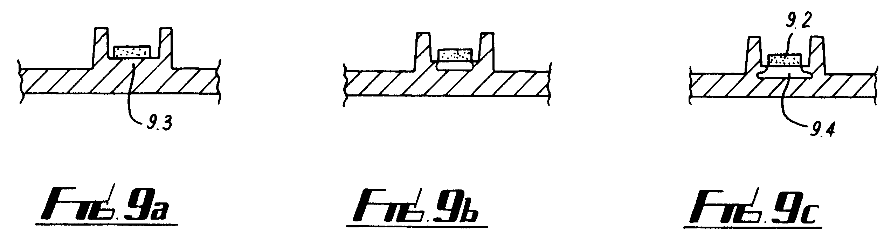

Further examples of applying gas pressure in localised areas or portions of the moulding in order to pressurise bosses, ribs, pillars or other protrusions 7.2 are illustrated in Figures 6a, 6b, 6c, 6d and 7 and are based on the fitting of flat discs or rectangular or other cut shapes of porous metal pieces 7.0 at positions on a mould surface in close proximity to the protrusions, and which together with a protrusion or protrusions are surrounded by seals 7.1 which are formed by, and are integral with, the plastic moulding.

It is possible to transmit pressure to the areas and portions of a moulding within a close proximity but outside a sealed area or portion of the mould in which gas pressure is directly applied as previously described.

This is achieved by the application of the gas pressure to the surface of the plastic within the sealed area and the consequent transmission of the pressure through the medium of the molten or semi-molten plastic within the wall section of the plastic moulding.

At the same time displacement of plastic in the direction of the arrows in Figure 7 from within the sealed pressurised area or portion of the moulding may compensate for the natural volumetric shrinkage of the plastic outside the area and seal perimeter, but within a close proximity of the seal. This provides a means of pressurising and compensating for the natural shrinkage within positions of the moulding where it is impractical to provide sealed gas pressure for reasons such as intricate three-dimensional moulded features, the use of stationary or moving cores, mould shut-out faces, or other mould design features where it is impractical to include effective gas seals. Figure 7 illustrates a potential benefit of applying pressure to the plastic by injecting gas 7.4 through a porous insert 7.0 in the mould in a sealed area 7.5, which may not include a protrusion, in order to transmit pressure into the plastic outside the sealed area. This creates a pressure in the locality of a protrusion 7.6 and displaces plastic 7.7 from within the sealed area to compensate for the volumetric shrinkage of the plastic in the locality of the protrusion, thereby preventing sink marks on the moulding surface opposite the protrusion 7.8.

This is particularly beneficial in providing a means of applying pressure and compensating for material shrinkage in positions remote from the plastic material feed points from which pressure is normally applied in conventional injection moulding and from which additional material is normally injected as the material is cooled and volumetric shrinkage occurs.

Figures 8a, 8b and 8c illustrate a further embodiment of the invention in which a moulding comprises strengthening ribs which are designed as a pair of ribs 8.1 which also form a continuous seal around a localised area in which gas is injected through one or more porous metal inserts 8.2 in the mould, thereby applying pressure and displacement of plastic as previously described within the sealed area. This method of increasing the rigidity of mouldings may be particularly beneficial for automotive body panels and other similar flat large area mouldings requiring added strength and rigidity.

Figures 9a, 9b and 9c illustrate progressive steps in the injection of gas between a pair of rib seals and illustrate the displacement of plastic from between the seals in the pressurised sealed area, and also how it may be beneficial to allow for the displacement of plastic from within the sealed area by the additional thickness of wall section 9.3 in the sealed area between the rib seals. It illustrates how after the injection of gas 9.4 from porous metal inserts 9.2, the thickness of wall section within the sealed area is similar to that of the surrounding wall section.

It will be appreciated that the above embodiments have been described by way of example only and that many variations are possible without departing from the scope of the invention.

## Claims

1. Apparatus for injection moulding comprising first and second mould parts (1.1, 1.2) defining a mould cavity (1.19) means (1.17) for feeding synthetic plastics material to the mould cavity and means (1.20) for feeding gas under pressure to the mould cavity, characterised by means (2.11) for producing a seal associated with the means for feeding gas operative to restrict the flow of gas into the mould cavity beyond a certain point, said seal being formed by the fed synthetic plastics material being urged during moulding against the mould surface.

2. Apparatus as claimed in claim 1, in which means (1.24) are provided for controlling the pressure of the gas in order to assist the moulding process.

3. Apparatus as claimed in claim 1 or 2, in which means (1.24) are provided for controlling the time of injection of the gas.

4. Apparatus as claimed in claim 1, 2 or 3, in which the means for feeding gas comprises a sealed passage (1.20) disposed in one part of the mould.

5. A method of injection moulding including the steps of feeding synthetic plastics material to the mould cavity defined by a mould, and feeding gas to the mould cavity under pressure characterised by confining the gas by a seal or seals to a specific area or areas in the mould cavity in order to assist the moulding process, said seal(s) being formed during moulding by the fed synthetic astics material being urged against the mould surface.

6. A method as claimed in claim 5, in which the pressure of the gas is controlled in order to assist the moulding process.

7. A method as claimed in claim 5 or 6, in which the timing of injection of the gas is controlled.

8. A method as claimed in claim 5, 6 or 7, in which gas pressure is applied within a sealed area to transmit pressure to plastics material outside that area to urge plastic material to compensate for shrinkage.

9. A moulded article made by the apparatus of any of claims 1 to 4

10. A moulded article made by the method of claims 5 to 8.

## Patentansprüche

1. Spritzgießvorrichtung mit einer ersten und zweiten Formhälfte (1.1, 1.2), die eine Formkavität (1.19) definieren, Mitteln (1.17) zum Zuführen von Kunststoffmaterial in die Formkavität, und Mitteln (1.20) zum Zuführen von Gas unter Druck in die Formkavität,
**gekennzeichnet** durch Mittel (2.11) zum Bewirken einer Abdichtung, die den Mitteln zur Zuführung von Gas zugeordnet ist und die Wirkung hat, die Gasströmung in die Formkavität über einen bestimmten Punkt hinaus zu beschränken, wobei die Dichtung dadurch gebildet wird, daß das zugeführte Kunststoffmaterial während der Formung gegen die Formoberfläche gedrückt wird.

2. Vorrichtung nach Anspruch 1,
bei der Mittel (1.24) vorgesehen sind zum Steuern des Drucks des Gases zur Unterstützung des Formvorgangs.

3. Vorrichtung nach Anspruch 1 oder 2,
bei der Mittel (1.24) vorgesehen sind zum Steuern der Injektionszeit des Gases.

4. Vorrichtung nach Anspruch 1, 2 oder 3,
bei der die Mittel zur Zuführung von Gas einen abgedichteten Kanals (1.20) umfassen, der in einer Formhälfte angeordnet ist.

5. Verfahren zum Spritzgießen mit den Schritten des Zuführens von Kunststoffmaterial in die von einer Form definierte Formkavität und des Zuführens von Gas unter Druck in die Formkavität, dadurch **gekennzeichnet,** daß das Gas durch eine oder mehrere Dichtungsstellen auf einen oder mehrere spezifische Bereiche in der Formkavität eingegrenzt wird, um den Formvorgang zu unterstützen, wobei die Dichtungsstelle(n) während des Formvorgangs dadurch gebildet wird (werden), daß das zugeführte Kunststoffmaterial gegen die Formoberfläche gedrückt wird.

6. Verfahren nach Anspruch 5,
bei dem der Gasdruck gesteuert wird, um den Formvorgang zu unterstützen.

7. Verfahren nach Anspruch 5 oder 6,
bei dem die Zeit der Gasinjektion gesteuert wird.

8. Verfahren nach Anspruch 5, 6 oder 7,
bei dem Gasdruck innerhalb eines abgedichteten Bereiches ausgeübt wird, um Druck auf außerhalb dieses Bereiches befindliches Kunststoffmaterial zu übertragen, um das Kunststoffmaterial für einen Schrumpfungsausgleich zu beaufschlagen.

9. Spritzgegossener Gegenstand, der mit der Vorrichtung nach einem der Ansprüche 1 bis 4 hergestellt wurde.

10. Spritzgegossener Gegenstand, der nach dem Verfahren gemäß den Ansprüchen 5 bis 8 hergestellt wurde.

## Revendications

1. Appareil de moulage par injection, comprenant des première et deuxième parties de moule (1.1, 1.2), définissant une cavité de moulage (1.19), des moyens (1.17), conçus pour alimenter la cavité de moulage en matière plastique synthétique, et des moyens (1.20) d'alimentation en gaz sous pression de la cavité de moulage, caractérisé par des moyens (2.11) pour produire une étanchéité associé aux moyens de fourniture de gaz, fonctionnant pour restreindre le débit de gaz pénétrant dans la cavité de moulage, au-delà d'un certain point, ladite étanchéité étant constituée par la matière plastique synthétique et d'alimentation, qui est repoussée contre la surface du moule pendant le moulage.

2. Appareil selon la revendication 1, dans lequel des moyens (1.24) sont prévus pour réguler la pression du gaz de manière à assister le processus de moulage.

3. Appareil selon la revendication 1 ou 2, dans lequel des moyens (1.24) sont prévus pour maîtriser le temps d'injection du gaz.

4. Appareil selon la revendication 1, 2 ou 3, dans lequel les moyens d'alimentation en gaz comprennent un passage étanchéifié (1.20) disposé dans une des parties du moule.

5. Procédé de moulage par injection comprenant les étapes consistant à alimenter en matière plastique synthétique la cavité de moulage définie par un moule et à alimenter en gaz la cavité de moulage, sous pression, caractérisé par le fait qu'on confine le gaz par un ou plusieurs joints d'étanchéité, de manière à ce qu'une ou plusieurs zones spécifiques soient constituées dans la cavité de moulage pour favoriser le processus de moulage, le ou lesdits joints d'étanchéité étant formés durant le moulage par la matière plastique synthétique d'alimentation repoussée contre la surface de moulage.

6. Procédé selon la revendication 5, dans lequel la pression du gaz est régulée de manière à favoriser le processus de moulage.

7. Procédé selon la revendication 5 ou 6, dans lequel le cadencement de l'injection du gaz est commandé.

8. Procédé selon la revendication 5, 6 ou 7 dans lequel la pression du gaz est appliquée dans une zone étanchéifiée de manière à transmettre la pression à la matière plastique se trouvant hors de cette zone, pour repousser la matière plastique afin de compenser le phénomène de rétraction.

9. Article moulé réalisé par l'appareil selon l'une quelconque des revendications 1 à 4.

10. Article moulé fabriqué par le procédé selon les revendications 5 à 8.
